# EUROPÄISCHE PATENTSCHRIFT

(11) **EP 0 635 896 B1**
(45) Veröffentlichungstag und Bekanntmachung des Hinweises auf die Patenterteilung: **24.09.1997**
(21) Anmeldenummer: 93810517.8
(22) Anmeldetag: 20.07.1993
(51) Int. Cl.: H01M 8/24, H01M 8/06

(54) **Zentralsymmetrische Brennstoffzellenbatterie**
Centrally symmetric fuel cell battery
Pile à combustible à symétrie axiale

(43) Veröffentlichungstag der Anmeldung: 25.01.1995
(73) Patentinhaber: Sulzer Hexis AG, 8400 Winterthur (CH)
(72) Erfinder: Diethelm, Roland, CH-8494 Bauma (CH)
(74) Vertreter: Heubeck, Bernhard

(56) Entgegenhaltungen:
- EP-A- 0 398 111
- EP-A- 0 414 270
- EP-A- 0 437 175
- EP-A- 0 490 808
- EP-A- 0 551 054
- WO-A-91/11829
- PATENT ABSTRACTS OF JAPAN vol. 16, no. 267 (E-1217)16. Juni 1992 & JP-A-04 062 757 (NKK CORP) 27. Februar 1992

## Beschreibung

Die Erfindung betrifft eine Brennstoffzellenbatterie gemäss Oberbegriff von Anspruch 1. Eine derartige Vorrichtung ist aus der EP-A 0 551 054 bekannt. Die Erfindung bezieht sich auch auf eine Anordnung, in der mindestens zwei der erfindungsgemässen Brennstoffzellenbatterien in einem gemeinsamen Gehäuse zusammengefasst sind.

Die elektrochemisch aktive Platte - der sogenannte PEN - ist bei der bekannten Brennstoffzelle ein selbsttragendes Element, das aufgrund grosser Zerbrechlichkeit nur einen beschränkten Durchmesser aufweisen kann. Es ist nicht wirtschaftlich, für den Durchmesser mehr als rund 20 cm vorzusehen. Es ist Aufgabe der Erfindung, die bekannte Brennstoffzellenbatterie derart weiterzubilden, dass für den Durchmesser der PEN-Struktur mindestens 30 cm wirtschaftlich realisierbar ist. Durch die kennzeichnenden Merkmale des Anspruchs 1 ist die erfindungsgemässe Lösung gegeben. Die abhängigen Ansprüche beziehen sich auf besondere Ausführungsformen der erfindungsgemässen Brennstoffzellenbatterie.

Mit Vorteil wird die PEN-Struktur mittels eines Vakuum-Plasma-Spritzverfahrens, kurz VPS-Verfahrens, hergestellt. Im wesentlichen ist dieses Verfahren in der internationalen Anmeldung WO 91/11829 beschrieben. Neu ist allerdings bei der vorliegenden Erfindung, dass anstelle einer starren Trägerstruktur, die porös ist, eine flexible Trägerschicht, beispielsweise ein Metallfilz, vorgesehen wird. Unterschiedliche Wärmeausdehnungen des PEN und des Wärmetauscherelements führen dank der Flexibilität der Trägerschicht zu lediglich geringen Thermospannungen, die kein Zerbrechen des PEN oder Bilden von Rissen zur Folge haben. Beim VPS-Aufspritzen des Materials für die Gaselektrode auf die Trägerschicht kann deren Porosität ein Problem bilden. Zur Beseitigung dieses Problems werden die Poren der Trägerschicht oberflächlich mit einer Aufschlämmung von metallischen Partikeln (z.B. Nickel, Partikelgrösse kleiner als ein Mikrometer, vermischt mit Terpineol) gefüllt.

Nachfolgend wird die Erfindung im Zusammenhang mit Zeichnungen näher erläutert. Es zeigen:
- Fig. 1: einen Modul der erfindungsgemässen Brennstoffzellenbatterie,
- Fig. 2: einen Schnitt längs der Batterieachse durch den Modul der Fig.1,
- Fig. 3: eine variante Ausbildungsform der Trägerschicht des PEN,
- Fig. 4: eine Draufsicht auf eine Anordnung mit drei erfindungsgemässen Brennstoffzellenbatterien und
- Fig. 5: eine teilweise Seitenansicht der Anordnung der Fig.4.

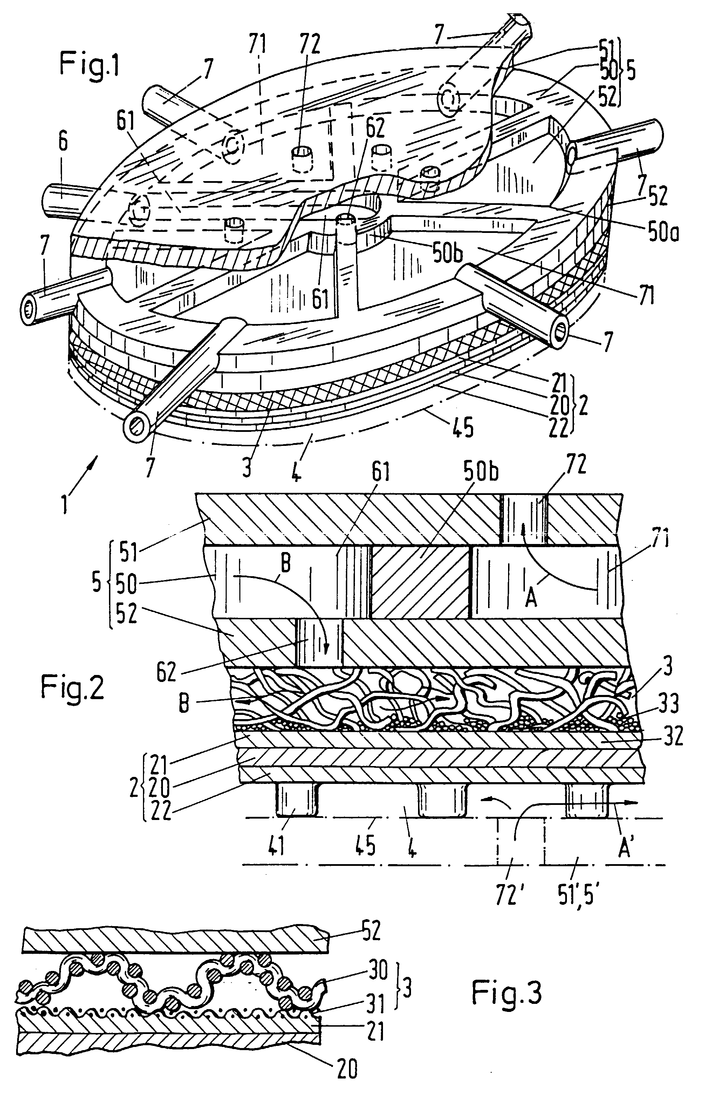

Der in Fig.1 dargestellte Modul 1 weist folgende Bestandteile auf: die elektrochemisch aktive Platte 2 (PEN) mit dem Festkörperelektrolyten 20, der Gaselektrode 21 und der Luftelektrode 22; die poröse und flexible Trägerschicht 3; der Luftraum 4 mit Stromabnehmern 41 (siehe Fig.2); das scheibenförmige Wärmetauscherelement 5, bestehend aus einem kammernbildenden Mittelstück 50 (Kammern 61 und 71, Trennwände 50a und 50b) und zwei Seitenstücken 51 und 52 mit einer zentral angeordneten Gasaustrittsöffnung 62 bzw. mit Luftaustrittsöffnungen 72; eine Gaszufuhrleitung 6 und mehrere Luftzufuhrleitungen 7. Strichpunktiert ist die Grenzfläche 45 gezeigt, an welcher der dargestellte Modul 1 mit einem benachbarten, nicht gezeigten Modul in Kontakt steht. In den Kammern 61 und 71 wird das Gas bzw. die - bereits vorgewärmte - Luft praktisch auf Reaktionstemperatur aufgeheizt. Die Kammer 61 für das Gas ist gegenüber den Kammern 71 für die Luft gasdicht abgeschlossen. Das Wärmetauscherelement 5 wird aus einer Hochtemperaturlegierung gefertigt (beispielsweise "Haynes 230 Alloy", Legierung mit 57% Ni, 22% Cr, 14% W).

Das Schnittbild der Fig.2 zeigt vergrössert und ausschnittsweise die Bestandteile des Moduls der Fig.1. Die Trägerschicht 3 - hier ein Metallfilz - steht an der Grenzfläche 32 mit der Gaselektrode 21 in fester Verbindung. Im Bereich dieser Grenzfläche können die Poren der Schicht 3 mit metallischen Pulverkörnern 33 imprägniert sein. Mit den Pfeilen A und B ist die Strömungsrichtung der Luft bzw. des Gases angegeben. Von einem benachbarten Modul ist strichpunktiert die luftseitige Wand 51' des Wärmetauscherelements 5' angedeutet. Der Pfeil A' gibt die Strömung der in diesem Wärmetauscher 5' aufgeheizten Luft an (Luftaustrittsöffnung 72').

Die Stromabnehmer 41 auf der Luftelektrode 22, die beispielsweise zäpfchenartig ausgebildet sind, stehen vorteilhafterweise mit der Wärmetauscherwand 51' lediglich in berührendem Kontakt. Dies ermöglicht eine Gleitbewegung bei unterschiedlicher Ausdehung des metallischen Wärmetauschers 5' und des PEN. Es ist eine Legierung bekannt (95% Chrom, Rest Eisen und Yttriumoxid; Firma Plansee), deren Wärmeausdehnung gleich ist wie jene des PEN. Wird der Wärmetauscher 5 bzw. 5' aus dieser Legierung gefertigt, so können die Stromabnehmer 41 in fester Verbindung mit der Seitenwand 51' stehen, ohne dass es zu schädlichen Thermospannungen kommt.

Fig.3 zeigt eine variante Ausführungsform der Trägerschicht 3: ein grobmaschiges, gewelltes Drahtgewebe 30 bildet zusammen mit einem feinmaschigen, ebenen Drahtgewebe 31 die Schicht 3. Auf dem feinmaschigen Drahtgewebe ist die Gaselektrode aufgebracht. Das feinmaschige Drahtgewebe kann ähnlich wie die Oberfläche des Metallfilzes 3, Fig.2, mit einem metallischen Pulver imprägniert sein. Die Verbindungen zwischen den beiden Drahtgeweben 30 und 31 sowie zwischen dem Drahtgewebe 30 und der Wärmetauscherwand 52 können beispielsweise mittels Punktschweissens hergestellt werden.

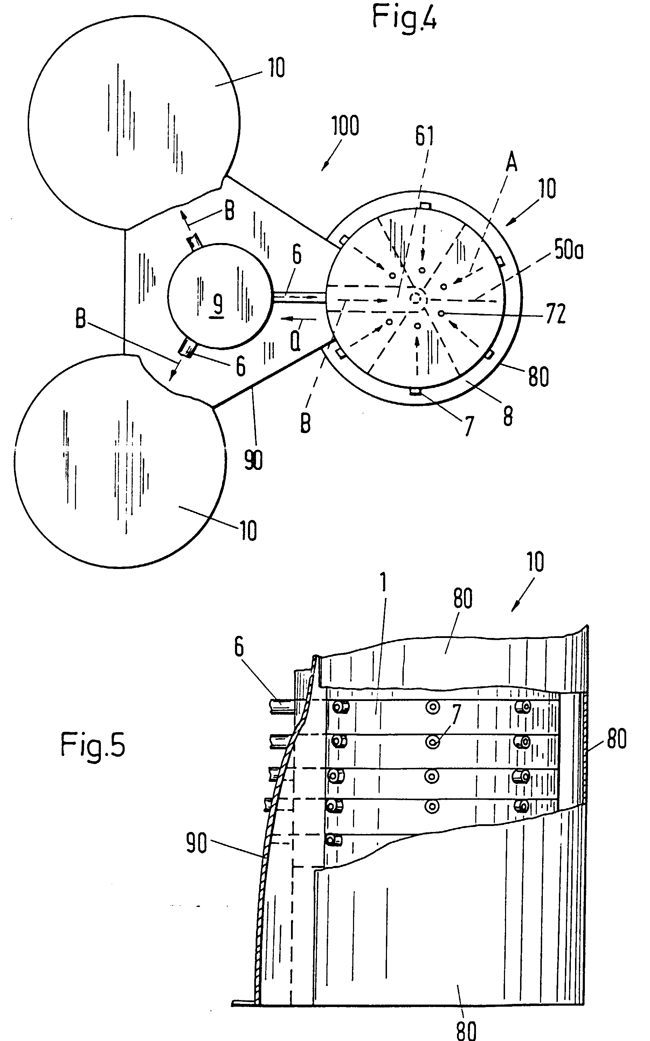

Die Anordnung 100 der Fig.4 umfasst drei erfindungsgemässe Brennstoffzellenbatterien 10, die in einem gemeinsamen Gehäuse mit den zylindrischen Wänden 80 und den ebenen Wänden 90 untergebracht sind. Fig.5 zeigt ausschnittsweise eine Seitenansicht. In der Mitte der Anordnung 100 befindet sich eine "Reforming"-Vorrichtung 9 (vgl. dazu EP-A 0 551 054). Mit dem Pfeil Q ist angedeutet, dass Strahlungswärme, die als Abwärme in den Brennstoffzellen 1 anfällt, zur Vorrichtung 9 geleitet wird, wo sie für den endothermen Umwandlungsprozess (Methan und Wasserdampf zu Wasserstoff und Kohlenmonoxid) genutzt wird. Im Bereich 8 zwischen dem Stapel der Brennstoffzellen 1 und der Aussenwand 80 sind Einbauten vorgesehen (nicht dargestellt), mit denen einerseits ein Wärmeverlust an die Umgebung klein gehalten wird und andererseits die frisch zugeführte Luft vorgewärmt wird (vgl. dazu die EP-Anmeldung Nr. 92810572.5). Für die Anordnung 100 ist eine Leistung von 50 kW zu erwarten, wenn die drei Zellenstapel jeweils 100 Module umfassen und die PEN einen Durchmesser von 30 cm aufweisen.

## Patentansprüche

1. Brennstoffzellenbatterie (10) mit stapelartig angeordneten Moduln (1) und mit Luft sowie gasförmigem Brennstoff als Reaktionspartner, wobei ein Modul jeweils im wesentlichen zentralsymmetrisch ausgebildet ist und folgende Komponenten umfasst,
- eine dreischichtige elektrochemisch aktive Platte (2), die frei von Durchbrüchen ist und aus einem oxydionenleitenden Feststoffelektrolyten (20) sowie einer Gas- und einer Luftelektrode (21 bzw. 22) besteht,
- und ein scheibenförmiges, metallisches Wärmetauscherelement (5) zum Aufheizen der Reaktionspartner,
dadurch gekennzeichnet, dass zwischen der Gaselektrode (21) und dem Wärmetauscherelement (5) eine poröse Schicht (3) eine Verbindung herstellt, die elektrisch leitend ist und bezüglich Thermospannungen ausgleichend wirkt, dass die oberflächlichen Poren dieser Schicht (3) auf der Seite der Gaselektrode (21) mit metallischen Partikeln (33) aufgefüllt sind, dass die poröse Schicht (3) zusammen mit der elektrochemisch aktiven Platte (2) eine zusammenhängende Einheit bildet und dass die drei Schichten (21, 20, 22) der elektrochemisch aktiven Platte (2) mit einem Vakuum-Plasma-Spritzverfahren hergestellt sind.

2. Brennstoffzellenbatterie nach Anspruch 1, dadurch gekennzeichnet, dass die poröse Schicht (3) aus einem Metallfilz besteht.

3. Brennstoffzellenbatterie nach Anspruch 1, dadurch gekennzeichnet, dass die poröse Schicht (3) ein grobmaschiges, gewelltes Drahtgewebe (30) und ein feinmaschiges, ebenes Drahtgewebe (31) umfasst, wobei das feinmaschige Drahtgewebe auf der Seite der Gaselektrode (21) angeordnet ist und mit metallischen Partikeln imprägniert ist.

4. Brennstoffzellenbatterie nach einem der Ansprüche 1 bis 3, dadurch gekennzeichnet, dass mit der Oberfläche der Luftelektrode (22) Strukturelemente (41) in fester Verbindung stehen, die für die Stromsammlung und die elektrische Weiterleitung an einen benachbarten Modul vorgesehen sind.

5. Anordnung (100) mit mindestens zwei Brennstoffzellenbatterien (10) nach einem der Ansprüche 1 bis 4, mit einem gemeinsamen Gehäuse (80, 90) und einer gemeinsamen "Reforming"-Vorrichtung (9).

6. Anordnung nach Anspruch 5 mit rund 100 Moduln (1) pro Brennstoffzellenbatterie (10) und einem Durchmesser der elektrochemisch aktiven Platte (2) von rund 30 cm, zum Erzeugen einer elektrischen Leistung von rund 50 kW.

## Claims

1. Fuel cell battery (10) comprising modules (1) in stacked arrangement and using air and gaseous fuel as reactants, wherein every module is substantially centrally symmetric and comprises the following components,
a three-layer electrochemically active plate (2) with no openings which comprises a solid electrolyte (20) conducting oxide ions as well as a gas and an air electrode (21 and 22),
and a plate-shaped, metallic heat exchange element (5) for heating the reactants,
characterised in that a connection between the gas electrode (21) and the heat exchange element (5) is made by a porous layer (3) which is electrically conductive and acts to equalise thermal stresses, that the surface pores of this layer (3) on the side of the gas electrode (21) are filled with metallic particles (33), that the porous layer (3) forms together with the electrochemically active plate (2) an integrated unit, and that the three layers (21, 20, 22) of the electrochemically active plate (2) are produced by a vacuum plasma spray process.

2. Fuel cell battery according to claim 1, characterised in that the porous layer (3) is of a metal felt.

3. Fuel cell battery according to claim 1, characterised in that the porous layer (3) comprises a coarse-meshed, undulated wire cloth (30) and a fine-meshed, planar wire cloth (31), the fine-meshed wire cloth being arranged on the side of the gas electrode (21) and impregnated with metallic particles.

4. Fuel cell battery according to one of claims 1 to 3, characterised in that structural elements (41) are firmly connected to the surface of the air electrode (22), the structural elements being provided for the collection of current and electric conducting to an adjacent module.

5. Arrangement (100) including at least two fuel cell batteries (10) according to one of claims 1 to 4, comprising a common housing (80, 90) and a common reforming device (9).

6. Arrangement according to claim 5 including about 100 modules (1) per fuel cell battery (10) and the electrochemically active plate (2) has a diameter of about 30 cm to produce electric output of about 50 kW.

## Revendications

1. Pile à combustible (10) avec des modules (1) disposés suivant un empilage et avec l'air ainsi qu'un combustible gazeux comme partenaire réactionnel, un module étant réalisé respectivement sensiblement suivant une symétrie centrale et comportant les composants suivants
- une plaque (2) à trois couches, active électrochimiquement qui est exempte de perçages et qui est constituée d'un électrolyte solide (20) conduisant les ions oxyde ainsi que d'une électrode de gaz et d'air (21 et, respectivement 22),
- et un élément d'échange de chaleur métallique (5) en forme de disque pour chauffer les partenaires réactionnels, caractérisée en ce qu'entre l'électrode de gaz (21) et l'élément d'échange de chaleur (5), une couche poreuse (3) établit une liaison qui est électriquement conductrice et qui a un effet d'égalisation relativement aux tensions thermiques, que les pores de surface de cette couche (3) sont remplies sur le côté de l'électrode de gaz (21) avec des particules métalliques (33), que la couche poreuse (3) conjointement avec la plaque électrochimiquement active (2) constitue une unité continue et que les trois couches (21, 20, 22) de la plaque électrochimiquement active (2) sont réalisées par un procédé de projection au plasma sous vide.

2. Pile à combustible selon la revendication 1, caractérisée en ce que la couche poreuse (3) est constituée d'un feutre métallique.

3. Pile à combustible selon la revendication 1, caractérisée en ce que la couche poreuse (3) comporte un tissu en fil métallique ondulé (30) à mailles grossières, et un tissu en fil métallique plan à mailles fines, (31), le tissu en fil métallique à mailles fines étant disposé au côté de l'électrode de gaz (21) et imprégné de particules métalliques.

4. Pile à combustible selon l'une des revendications 1 à 3, caractérisée en ce que des éléments de structure (41) sont en liaison fixe avec la surface de l'électrode d'air (22) qui sont prévus pour l'accumulation du courant et la transmission électrique à un module avoisinant.

5. Agencement (100) avec au moins deux piles à combustible (10) selon l'une des revendications 1 à 4, avec un boîtier commun (80, 90) et un dispositif de réformation commun (9).

6. Agencement selon la revendication 5 avec environ 100 modules (1) par pile à combustible (10) et avec un diamètre de la plaque électrochimiquement active (2) d'environ 30 cm, pour produire une puissance électrique d'environ 50 kW.
